# EUROPEAN PATENT APPLICATION

(11) **EP 2 887 316 A1**
(43) Date of publication of application: **24.06.2015**
(21) Application number: 13829724.7
(22) Date of filing: 14.08.2013
(51) Int. Cl.: G06T 7/20, G06F 3/01

(54) **INPUT DEVICE, INPUT METHOD, AND RECORDING MEDIUM**

(30) Priority: 17.08.2012 JP 2012181222
(71) Applicant: NEC Solution Innovators, Ltd., Tokyo 136-8627 (JP)
(72) Inventor: TANIMURA Ryohtaroh, Tokyo 1368627 (JP)
(74) Representative: Betten & Resch
(86) International application number: PCT/JP2013/071925
(87) International publication number: WO 2014/027674

(57) **Abstract**

An input device comprises an image acquirer (151) that acquires a picked-up image of an object moving in accordance with a user's intent, a movement trajectory extractor (152) that extracts, from trajectories indicated by the object, a plurality of successive movement trajectories corresponding to movement patterns stored in advance, a relative information acquirer (153) that acquires relative information representing relative relationships among the plurality of movement trajectories, and an input determiner (154) that determines a user input given to an apparatus based on the relative information.

## Description

### Technical Field

The present disclosure relates to an input device, an input method, and a non-transitory recording medium.

### Background Art

A so-called hand-gesture input device that performs an input by determining an instruction from a user based on a user's hand motion is known. Patent Literatures 1, 2 and 3 disclose, for example, an apparatus that recognizes a user's gesture based on a user's hand motion picked up by a camera, and controls an apparatus based on the recognized user's gesture.

### Citation List

### Patent Literature

Patent Literature 1: Unexamined Japanese Patent Application Kokai Publication No. 2002-083302
Patent Literature 2: Unexamined Japanese Patent Application Kokai Publication No. 2009-230460
Patent Literature 3: Unexamined Japanese Patent Application Kokai Publication No. 2011-186730

### Summary of Invention

### Technical Problem

A problem with conventional hand-gesture input devices is that recognition errors frequently occur such that a motion of putting back a hand to an original position after performing a gesture of moving the hand to the left is, for example, falsely recognized as a gesture of moving the hand to the right, and a circle drawing gesture is falsely recognized as gestures of a hand that is moving upward, downward, leftward, and rightward. Thus, there is a problem of recurring discrepancies between a user's intended gesture and a recognized gesture by the apparatus.

The present disclosure has been made in view of the aforementioned problems, and an objective of the present disclosure is to provide an input device, an input method, and a non-transitory recording medium accurately recognizable of a user's gesture as intended by the user.

### Solution to Problem

In accordance with a first aspect of the present disclosure, there is provided an input device comprising:
image acquiring means that acquires a picked-up image of an object moving in accordance with a user's intent;
movement trajectory extracting means that extracts, from trajectories of the object, a plurality of successive movement trajectories corresponding to movement patterns stored in advance;
relative information acquiring means that acquires relative information representing relative relationships among the plurality of movement trajectories; and
input determining means that determines an input given to a apparatus based on the relative information.

In accordance with a second aspect of the present disclosure, there is provided an input method comprising:
an image acquisition step for acquiring a picked-up image of an object moving in accordance with a user's intent;
a movement trajectory extraction step for extracting, from trajectories of the object, a plurality of successive movement trajectories corresponding to movement patterns stored in advance;
a relative information acquisition step for acquiring relative information representing relative relationships among the plurality of movement trajectories; and
an input determining step for determining a user input given to an apparatus based on the relative information.

In accordance with a third aspect of the present disclosure there is provided a non-transitory recording medium having stored therein a program for causing a computer to realize:
an image acquiring function of acquiring a picked-up image of an object moving in accordance with a user's intent;
a movement trajectory extraction function of extracting, from trajectories of the object, a plurality of successive movement trajectories corresponding to movement patterns stored in advance;
a relative information acquiring function of acquiring relative information representing relative relationships among the plurality of movement trajectories; and
an input determination function of determining a user input given to an apparatus based on the relative information.

### Advantageous Effects of Invention

According to the present disclosure, an input device, an input method, and a non-transitory recording medium accurately recognizable of a user's gesture can be provided.

### Brief Description of Drawings

### Description of Embodiments

FIG. 1 is a perspective diagram illustrating an input device according to an embodiment of the present disclosure;
FIG. 2 is a block diagram illustrating an internal structure of the input device illustrated in FIG. 1;
FIG. 3 is an explanatory functional block diagram of functions of a controller illustrated in FIG. 2;
FIG. 4 is an explanatory diagram of a movement-pattern information table that is stored in a memory illustrated in FIG. 2;
FIG. 5A is an explanatory diagram of a movement pattern of a user's hand that indicates a clockwise circle;
FIG. 5B is an explanatory diagram of a movement pattern of the user's hand that indicates a counterclockwise circle;
FIG. 5C is an explanatory diagram of a movement pattern of the user's hand in a leftward straight-line movement;
FIG. 5D is an explanatory diagram of a movement pattern of the user's hand in a rightward straight-line movement;
FIG. 6 is an explanatory diagram of a command table stored in the memory illustrated in FIG. 2;
FIG. 7A is an explanatory diagram of relative coverage information;
FIG. 7B is an explanatory diagram of relative position information;
FIG. 8A is an explanatory diagram of combination information of Record 1 in the command table illustrated in FIG. 6;
FIG. 8B is an explanatory diagram of combination information of Record 2 in the command table illustrated in FIG. 6;
FIG. 8C is an explanatory diagram of combination information of Record 3 in the command table illustrated in FIG. 6;
FIG. 8D is an explanatory diagram of combination information of Record 4 in the command table illustrated in FIG. 6;
FIG. 9 is a flowchart of an input process executed by the input device according to the embodiment of the present disclosure;
FIG. 10 is an explanatory diagram of image data utilized in the input process;
FIG. 11 is a diagram illustrating how a human hand trajectory is extracted from image data;
FIG. 12A is a diagram illustrating how two movement trajectories are extracted from image data;
FIG. 12B is a diagram illustrating how a movement pattern is determined and stored for each extracted movement trajectory as illustrated in FIG. 12A;
FIG. 13 is an explanatory diagram of relative movement quantity information and relative movement speed information;
FIG. 14 is a diagram illustrating how movement trajectories are consecutively produced which are determined as the same movement pattern;
FIG. 15A is a diagram illustrating how relative position information is acquired based on a distance between center positions within an coverage and a distance between each vertex; and
FIG. 15B is a diagram illustrating how relative position information is acquired based on the length of each side of the coverage.

### Description of Embodiments

Hereinafter, an input device according to an embodiment of the present disclosure will be described with reference to figures.

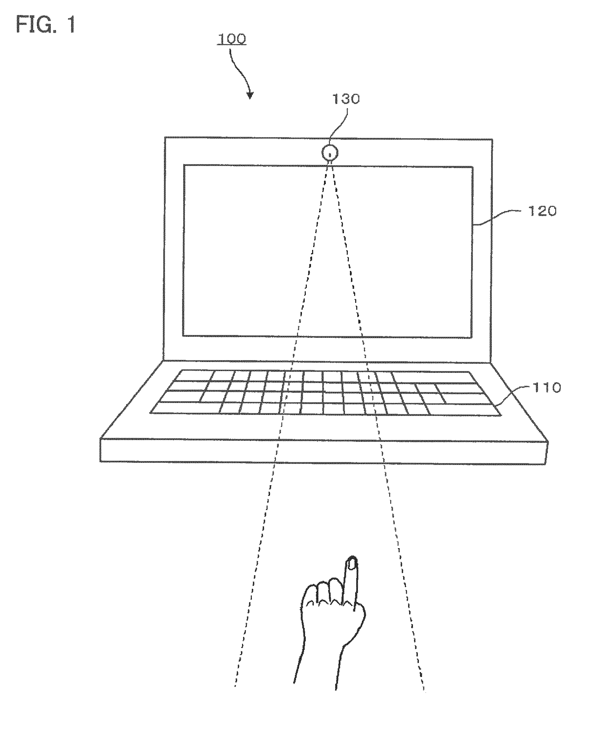

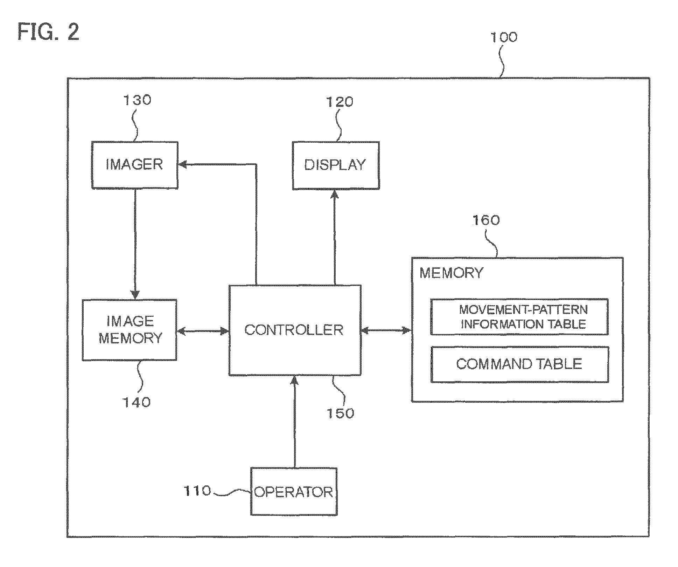

An input device 100 of this embodiment comprises a function that determines input operation (for example, a control instruction, a command, and the like to an apparatus by a user) given by the user to the apparatus based on a user's hand motion picked up by a camera. The input device 100 is, for example, a personal computer as illustrated in FIG. 1. As shown in FIG. 2, the input device 100 comprises an operator 110, a display 120, an imager 130, an image memory 140, a controller 150, and a memory 160.

The operator 110 comprises an input device such as a keyboard. The operator 110 receives an instruction and the like to initiate receiving of an input that is based on a user's gesture, and transmits the instruction to the controller 150, which will be discussed later.

The display 120 comprises a display device such as a liquid crystal display. The display 120 displays an image as controlled by the controller 150.

The imager 130 comprises a camera that utilizes an imaging device, such as a Charge Coupled Device (CCD) image sensor, or a Complementary Metal Oxide Semiconductor (CMOS) image sensor. The imager 130 is, for example, provided at the upper center of the display 120 as shown in FIG. 1. The imager 130 is provided so as to pick up an image in a direction facing the display 120. The imager 130 picks up an image of a user's hand (including video), and sequentially transmits the images to the image memory 140 as shown in FIG. 2.

The image memory 140 comprises a video memory constituted by a Random Access Memory (RAM) or the like. The image memory 140 stores image data transmitted from the imager 130. The image memory 140 transfers the stored image data to the controller 150 according to control by the controller 150.

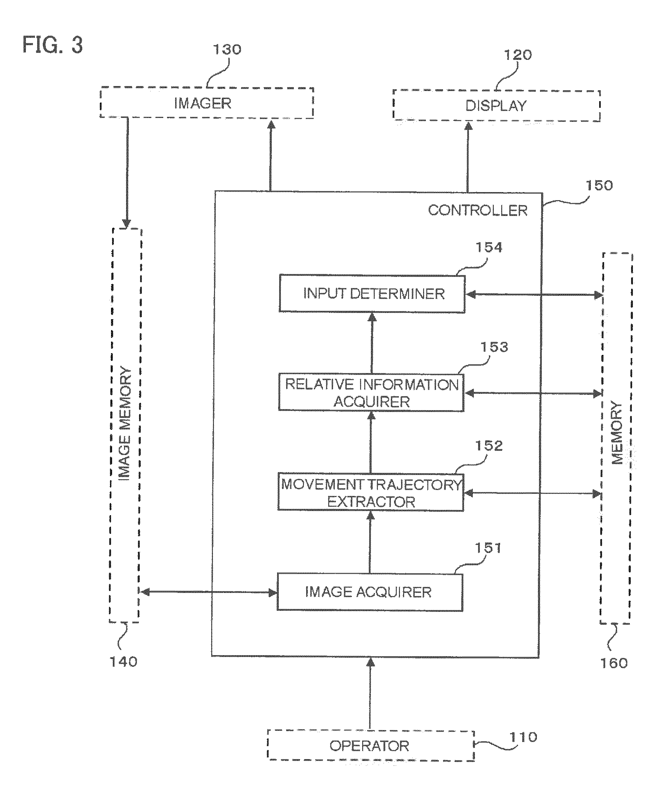

The controller 150 comprises a processing device such as a processor. The controller 150 operates in accordance with a program stored in an unillustrated Read Only Memory (ROM) or a RAM, and executes various operations including an "input process" which will be discussed later. The controller 150 operates in accordance with the "input process", thereby serving as an image acquirer 151, a movement trajectory extractor 152, a relative information acquirer 153, and an input determiner 154 as shown in FIG. 3. Note that these functions will be discussed later in the discussion on the "input process".

The memory 160 comprises a data readable/writable memory device, such as a Dynamic Random Access Memory (DRAM), a Static Random Access Memory (SRAM), a flash memory, and a hard disk. The memory 160 stores feature data of a shape of a human hand that is utilized as a reference to detect a range of the human hand from the image. In addition, the memory 160 stores data, such as a "movement-pattern information table" and a "command table".

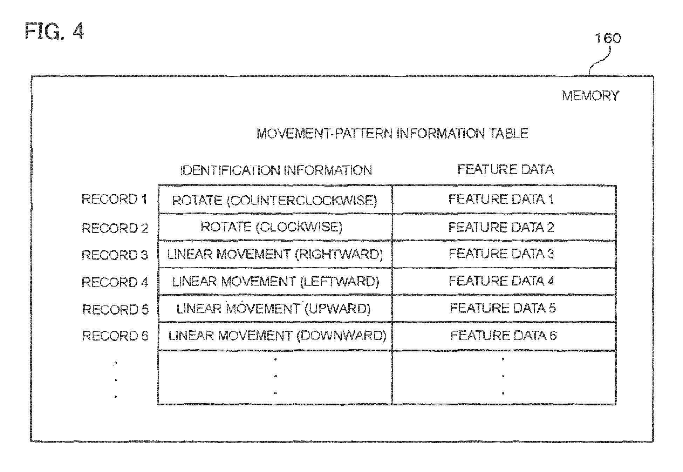

The "movement-pattern information table" is information for determining to which one of a plurality of movement patterns stored in advance a sequence of user's hand motions corresponds. Hereinafter, a sequence of user's hand motions, such as a continuous motion of user's hand within a predetermined time period (for example, 10 seconds) will be referred to as a "trajectory". A trajectory that corresponds to any one of the plurality of movement patterns stored in advance will be herein referred to as a "movement trajectory". The "movement pattern information" contains information in which "identification information" is associated with "feature data" as shown in FIG. 4. The "identification information" and the "feature data" are in a one-to-one correspondence.

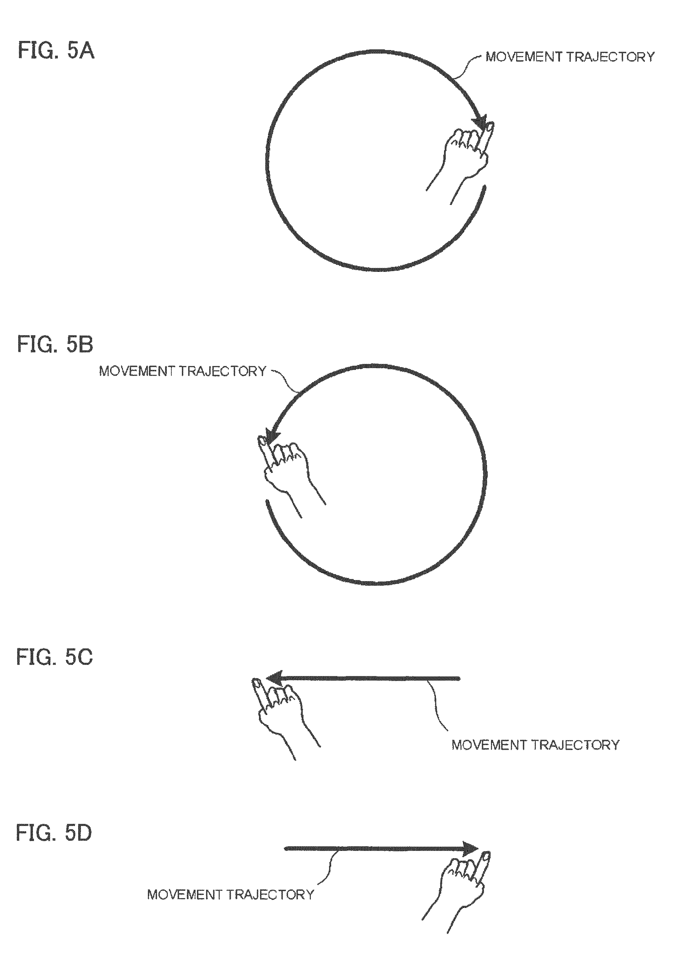

The "identification information" is information for identifying the movement pattern of user's hand. Identification information is information for making the movement pattern of the user's hand associated with a specific notation, such as "rotating (clockwise)" when the clockwise circle is indicated by the user's hand movement as shown in FIG. 5A, "rotating (counterclockwise)" when the counterclockwise circle is indicated as shown in FIG. 5B, "linear movement (leftward)" when the leftward linear movement is indicated as shown in FIG. 5C, and "linear movement (rightward)" when the rightward linear movement is indicated as shown in FIG. 5D. Note that the format of the identification information is not limited to any particular one. Numerical values, for example, 1, 2, 3, ..., may be assigned, and symbols, such as A, B, C, ..., may be given as well. Note that, in this specification, the rightward direction represents a direction to the right as viewed from the user. The same is true of the leftward direction.

The "feature data" is information for specifying a movement pattern of the user's hand. The feature data contains, for example, feature quantity data that is obtained by extracting and storing features of a predetermined motion indicated by the user's hand. The controller 150 determines whether or not the trajectory of the user's hand corresponds to any one of the movement patterns by checking the trajectory of user's hand with the feature data.

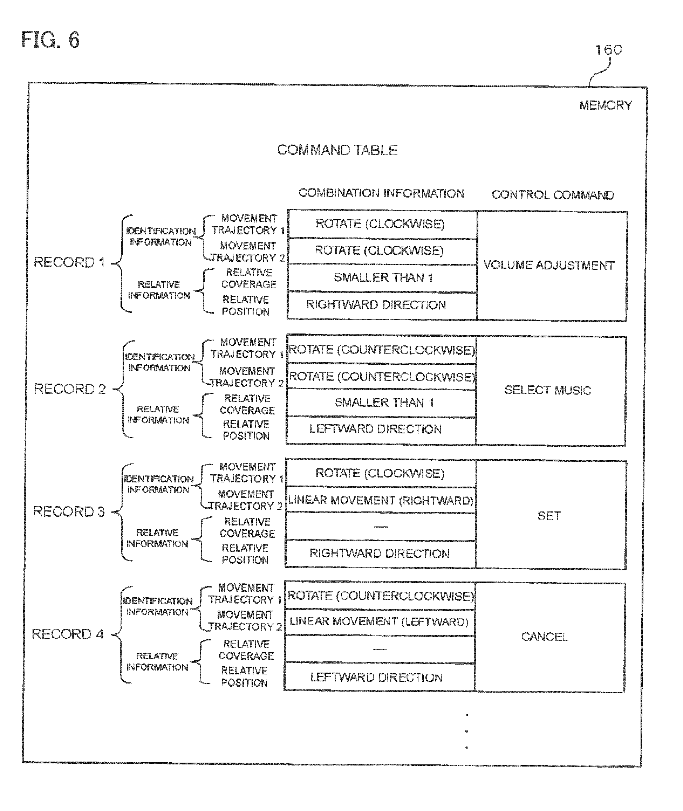

The "command table" is information for determining whether or not the user's gesture corresponds to any one of a plurality of apparatus commands. The command table contains information in which "combination information" is associated with "control command" as shown in FIG. 6.

The "combination information" is information for determining an instruction intended by the user's gesture. The combination information is information that contains combinations of the plurality of user's hand movement patterns, and includes combined information of "identification information" and "relative information".

The "relative information" is information representing relative relationships of the plurality of movement trajectories extracted from the user's hand trajectory. The relative relationships of plurality of movement trajectories mean, for example, differences in coverage occupied by a movement trajectory, and differences in positions of movement trajectories. The relative information includes "relative coverage information", "relative position information", and the like.

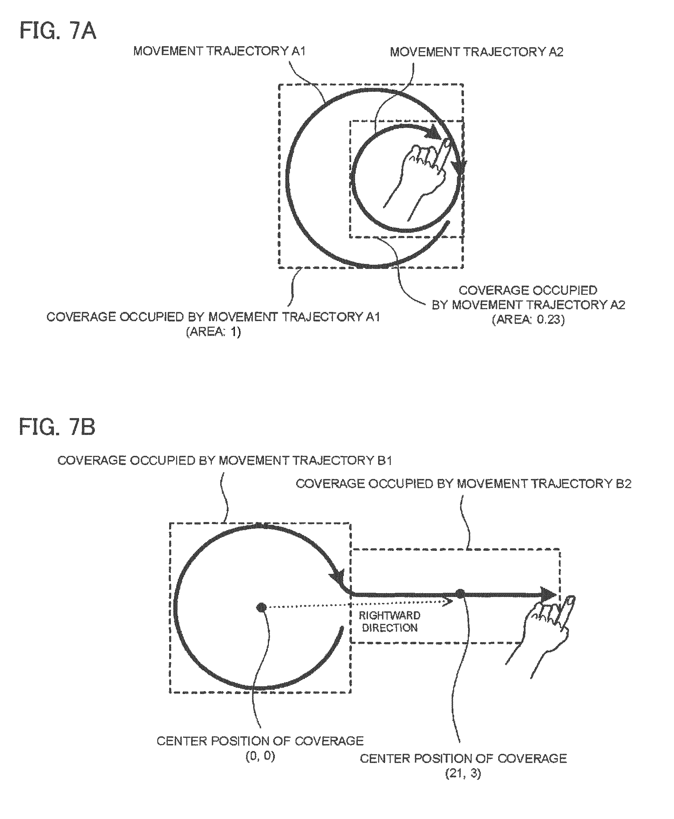

The "relative coverage information" is information that represents relative differences in the coverages occupied by the plurality of movement trajectories, and the relative coverage information represents, for example, the size of the coverage occupied by the other movement trajectory with reference to a movement trajectory among the plurality of movement trajectories. Assuming that, for example, two movement trajectories indicating features represented by the feature data are detected from the trajectories of user's hand as shown in FIG. 7A (hereinafter, the two movement trajectories are referred to as a "movement trajectory A1" and a "movement trajectory A2"). In this case, for example, the relative coverage information is the area of the minimum rectangular enclosing the movement trajectory A2 relative to the area of the minimum rectangular enclosing the movement trajectory A1 (for example, the area of coverage occupied by the movement trajectory A2 when the area of coverage covered by the movement trajectory A1 is 1).

The "relative position information" is information representing relative positional relationships of the plurality of movement trajectories, and the relative position information represents, for example, the direction and/or coordinates of the other movement trajectory with reference to a movement trajectory among the plurality of movement trajectories. Assuming that, for example, two movement trajectories having features represented by the feature data are detected from the trajectories of the user's hand as shown in FIG. 7B (hereinafter, the two movement trajectories are referred to as a "movement trajectory B1"and a "movement trajectory B2"). In this case, the relative position information represents, for example, the direction (for example, "rightward direction") of a center position within the coverage occupied by the movement trajectory B2 relative to the center position of the coverage occupied by the movement trajectory B1, and coordinates (for example, (21, 3)) of the center position of the movement trajectory B2 relative to the center position of the movement trajectory B1, for example, the origin (0, 0).

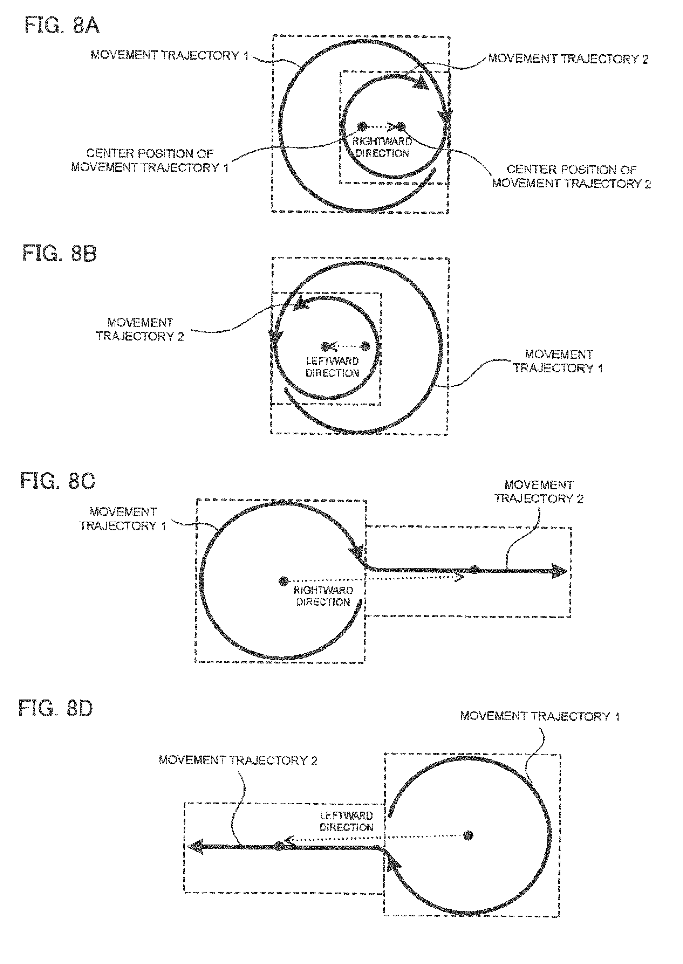

FIGS. 8A to 8D illustrate trajectories that respectively correspond to the combination information of Records 1 to 4 shown in FIG. 6 to facilitate understanding for the aforementioned "combination information". The trajectory shown in FIG. 8A is constituted as two successive clockwise movement trajectories (hereinafter, the first movement trajectory is referred to as a "movement trajectory 1" and the subsequent movement trajectory is referred to as a "movement trajectory 2"), the area of movement trajectory 2 is smaller than 1 when the area of movement trajectory 1 is 1, and the center position of the movement trajectory 2 is located on the right side of the center position of the movement trajectory 1. Hence, the trajectory in FIG. 8A corresponds to the combination information of Record 1 shown in FIG. 6. The trajectory shown in FIG. 8B is constituted as two successive counterclockwise movement trajectories, the area of movement trajectory 2 is smaller than 1 when the area of the movement trajectory 1 is 1, and the center position of movement trajectory 2 is located on the left side of the center position of the movement trajectory 1. Hence, the trajectory in FIG. 8B corresponds to the combination information of Record 2 shown in FIG. 6. The trajectory in FIG. 8C is constituted as a sequence of the clockwise movement trajectory and the movement trajectory in the rightward linear movement, and the center position of movement trajectory 2 is located on the right side of the center position of the movement trajectory 1. Hence, the trajectory in FIG. 8C corresponds to the combination of Record 3 shown in FIG. 6. The trajectory in FIG. 8D is constituted as a sequence of the clockwise movement trajectory and the movement trajectory in the leftward linear movement, and the center position of the movement trajectory 2 is located on the left side of the center position of the movement trajectory 1. Hence, the trajectory in FIG. 8D corresponds to the combination information of Record 4 shown in FIG. 6. The controller 150 analyzes image data that is picked up by the imager 130 and stored in the image memory 140, and determines to which one of the plurality of pieces of combination information stored in the command table the trajectory of user's hand corresponds.

The "control command" is control information for controlling an apparatus. The "control command" is, for example, the control information, such as playback, pause, fast forward, skip, set, cancel, and volume adjustment that are input to an application software like a music player software, or an operating system, and the like. The controller 150 determines to which one of the aforementioned pieces of "combination information" the user's gesture corresponds, and inputs the control command associated with the determined combination information to the application software and the like.

Next, an operation of the input device 100 employing such a structure will be described.

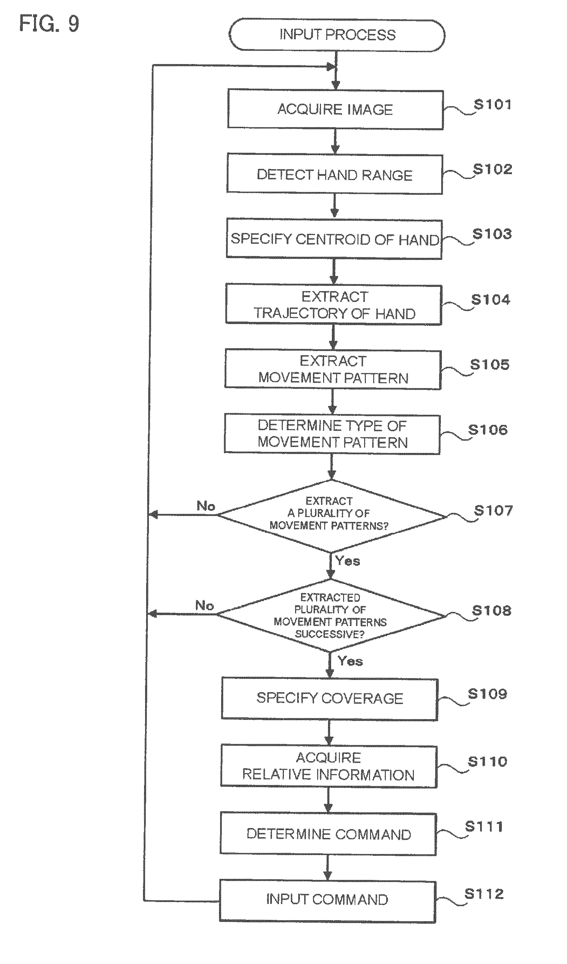

The controller 150 instructs, upon receiving a process initiation instruction from the operator 110, the imager 130 to initiate the image-pickup. The imager 130 sequentially transmits, having received the instruction to initiate the image-pickup, the picked-up images to the image memory 140. In addition, the controller 150 executes, upon receiving the process initiation instruction from the operator 110, application software, such as music player software, and initiates the "input process" for inputting the control command to the application software. Hereinafter, the "input process" will be described with reference to a flowchart illustrated in FIG. 9.

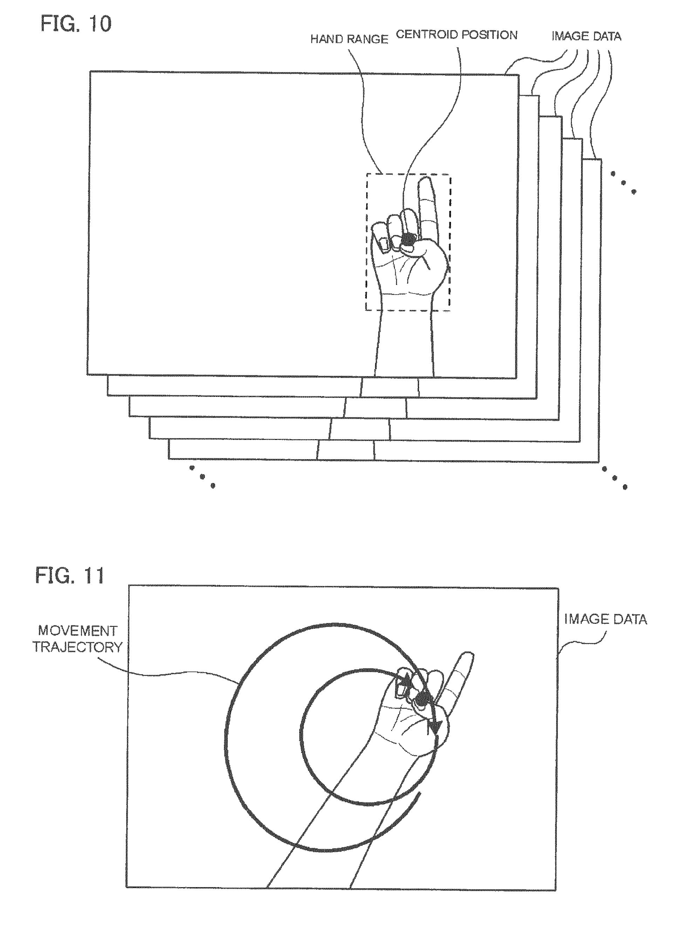

An image acquirer 151 of the controller 150 acquires, from the image memory 140, the image data of the latest predetermined time period (for example, 10 seconds) at which the images of the human hand are picked up (for example, a plurality of image data shown in FIG. 10) (step S101).

Returning to the flow in FIG. 9, the movement trajectory extractor 152 of the controller 150 detects the range of the human hand for each of the plurality of image data (step S102). For example, the memory 160 pre-stores the pattern data of the extracted features of the shape of human hand, and the movement trajectory extractor 152 detects the range of the human hand within the image data (for example, the smallest rectangular range that encloses the human hand as indicated by a dashed line in FIG. 10, and hereinafter, referred to as a "hand range") by checking such pattern data with the image data acquired by the image acquirer 151. Note that the way of detecting the hand range is not limited to any particular one, and various conventional techniques are applicable.

Returning to the flow in FIG. 9, the movement trajectory extractor 152 specifies, based on information on the detected hand range, coordinates of a centroid position (hereinafter, referred to as "centroid coordinates") of the hand range for each of the plurality of image data (step S103). Note that the way of specifying the centroid coordinates is not limited to any particular one, and various conventional methods are applicable.

The movement trajectory extractor 152 extracts the trajectory of a human hand by utilizing the specified centroid coordinates (step S104). For example, the movement trajectory extractor 152 transcribes the plurality of specified centroid coordinates on the same coordinate plane, and links the plurality of transcribed centroid coordinates in chronological order, thereby extracting the trajectory of the human hand as is shown in, for example, FIG. 11. Note that the way of extracting the trajectory is not limited to any particular one, and various conventional techniques are applicable.

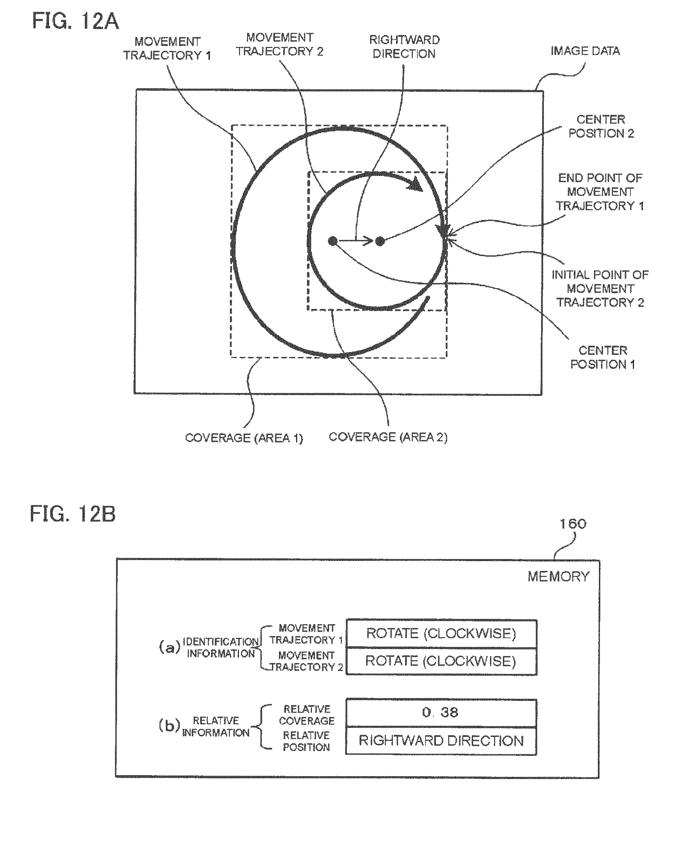

Returning to the flow in FIG. 9, the movement trajectory extractor 152 extracts the movement trajectory that has a movement pattern matching the feature data among the extracted trajectories, by checking the extracted trajectory information with the feature data contained in the movement-pattern information table (step S105). Supposing that the memory 160 stores, for example, the movement-pattern information table having stored therein the feature data (feature data 2 in the figure) representing the feature of clockwise rotation as shown in FIG. 4, and the controller 150 extracts trajectories as shown in FIG. 11, the movement trajectory extractor 152 extracts, from the extracted trajectories as shown in FIG. 12A, two movement trajectories (hereinafter, referred to as the "movement trajectory 1" and the "movement trajectory 2") of the movement pattern that match the feature of the feature data 2.

Returning to the flow in FIG. 9, the movement trajectory extractor 152 determines the types of movement pattern of the extracted movement trajectory. More specifically, the movement trajectory extractor 152 acquires, from the movement-pattern information table, the identification information associated with the extracted movement pattern. Thereafter, the movement trajectory extractor 152 stores the acquired identification information in the memory 160 in the occurring order (step S106). When, for example, the two movement trajectories matching the feature data 2 are extracted in the step S105 as shown in FIG. 12A, the movement trajectory extractor 152 acquires, from the movement-pattern information table shown in FIG. 4, the identification information "rotating (rightward)" associated with the feature data 2, and stores the acquired pieces of identification information, respectively, as the movement trajectory 1 that is the first movement trajectory, and as the movement trajectory 2 that is the second movement trajectory as shown in reference (a) of FIG. 12B. Note that when only one movement trajectory is extracted, the identification information of this movement trajectory is only stored. When three or more movement trajectories are extracted, the identification information of all three movement trajectories are stored. When, for example, three movement trajectories are extracted, the identification information is stored as the movement trajectory 1 that is the first movement trajectory, as the movement trajectory 2 that is the second movement trajectory, and as the movement trajectory 3 that is the third movement trajectory, respectively.

Returning to the flow in FIG. 9, the movement trajectory extractor 152 determines whether or not a plurality of movement trajectories having the features indicated by the feature data are extracted, in other words, determines whether a plurality of pieces of movement trajectory information is stored in the step S106 (step S107). When a plurality of pieces of movement trajectory information is not extracted (step S107; NO), the process returns to the step S101, and is repeated from the step S101 to the step S107 until the plurality of pieces of movement trajectory information is extracted. When the plurality of pieces of movement trajectory information is extracted (step S107; YES), the process proceeds to step S108.

The movement trajectory extractor 152 determines whether or not there is a temporally-successive movement trajectory among the plurality of extracted movement trajectories (step S108). As is shown in FIG. 12A, when, for example, the movement trajectory 1 and the movement trajectory 2 are extracted from the image data, the movement trajectory extractor 152 determines whether or not the end coordinates of the movement trajectory 1 coincide with the initial coordinates of the movement trajectory 2, and when determining that these coordinates coincide, the movement trajectory extractor 152 determines that the movement trajectory 1 and the movement trajectory 2 are temporally successive, and when determining that these coordinates do not coincide, the movement trajectory extractor 152 determines that the movement trajectory 1 and the movement trajectory 2 are not temporally successive. When there are no temporally-successive movement trajectories among the plurality of movement trajectories (Step S108; NO), the process returns to the step S101 and the controller 150 repeats the processes of the steps 101 to 108 until the controller 150 finds temporally-successive movement trajectories. When finding at least one continuous movement trajectory (step S108; YES), the process proceeds to step S109.

Returning to the flow in FIG.9, the relative information acquirer 153 specifies an coverage occupied by each of the plurality of temporally-successive movement trajectories (step S109). As shown in FIG. 12A, when, for example, the movement trajectory 1 and the movement trajectory 2 are extracted as the temporally-successive movement trajectories, ranges of the minimum rectangular (for example, portions enclosed with dashed lines in the figure) enclosing respective movement trajectories are specified as coverages that are respectively occupied.

Returning to the flow in FIG.9, the relative information acquirer 153 acquires, based on the specified coverage information, relative information (for example, the relative position information and the relative coverage information) of the plurality of temporally-successive movement trajectories. For example, the relative information acquirer 153 acquires the relative position information such as "rightward direction" that is a direction of the center (a center position 2 in the figure) in the coverage occupied by the movement trajectory 2 relative to the center (center position 1 in the figure) of the coverage occupied by the movement trajectory 1 in FIG.12A. In addition, the relative information acquirer 153 acquires a ratio of the area (an area 2 in the figure) of the coverage occupied by the movement trajectory 2 relative to the area (an area 1 in the figure) of the coverage occupied by the movement trajectory 1, such as "area 2/area 1 = 0.38" as the relative coverage information. The relative information acquirer 153 stores the acquired relative information in the memory 160 as shown in, for example, reference (b) in FIG. 12B (step S110).

Returning to the flow in FIG. 9, the input determiner 154 determines to which one of the pieces of combination information stored in the command table, the combination of the identification information acquired in the step S106 and the relative information acquired in the step S110, corresponds (step S111). Assuming that, for example, the command table is stored in the memory 160 as shown in FIG. 6, and the relative information acquirer 153 acquires the identification information indicated by reference (a) in FIG.12B and the relative information as indicated by reference (b), the combination information of Record 1 shown in FIG.6 is determined as combination information that corresponds to the combination of the identification information and the relative information.

Returning to the flow in FIG.9, the input determiner 154 determines, based on the command table, a control command associated with the determined combination information as user input, and inputs the determined control command to an application software (step S112). For example, in the step S111, if it is determined that the combination information of Record 1 in FIG. 6 is the combination information corresponding to the combination of identification information and relative information, the input determiner 154 determines that the control command stored in Record 1 (volume adjustment) as the user input, and inputs this command to the application software.

Upon completion of the inputting of the control command, the process returns to the step S101 and again, the controller 150 repeats the processes from the step S101 to the step S112.

By executing the input process through the aforementioned approach, the controller 150 constitutes image acquiring means, movement trajectory extracting means, relative information acquiring means, and input determining means. In addition, the image acquiring means may include the imager 130.

According to this embodiment, the control command is determined based on the relative relationships among the plurality of movement trajectories. Therefore, the user's gesture is accurately recognized as intended by the user. For example, the conventional hand-gesture input devices determine the user's gesture by checking the movement trajectory of the user's hand with the movement pattern. In this case, recognition errors of gestures frequently occur due to variable nature of size and shape of the movement trajectories indicated by the user for each user. In this regard, the input device 100 of this embodiment recognizes the trajectories of user's hand as the succession of plurality of movement trajectories instead of a unified movement trajectory, and determines the control command based on presumably less varied relative relationships of these movement trajectories. Hence, the input device 100 is capable of reducing the recognition errors of user's gestures.

In addition, it is inevitable that the shapes of the movement patterns to be recognized by the hand-gesture input devices to become complicated if an attempt is made to increase the number of commands recognizable by the hand-gesture input devices. The more complicated the shapes are, the more recognition errors take place, resulting in a decrease of the recognition accuracy of the hand-gesture input devices. However, the input device 100 of this embodiment recognizes the trajectories of the user's hand as the succession of the plurality of movement trajectories, not as the unified movement trajectory. That is, the input device 100 recognizes a sequence of user's hand motions as the succession of the plurality of movement trajectories having a simple shape. Hence, each movement pattern that needs to be recognized by the input device 100 is more simplified compared to that of the conventional hand-gesture input devices, thereby reducing the occurrence of gesture recognition errors as a consequence.

Note that the foregoing description of the embodiment provides merely an example, and various modifications and applications can be made.

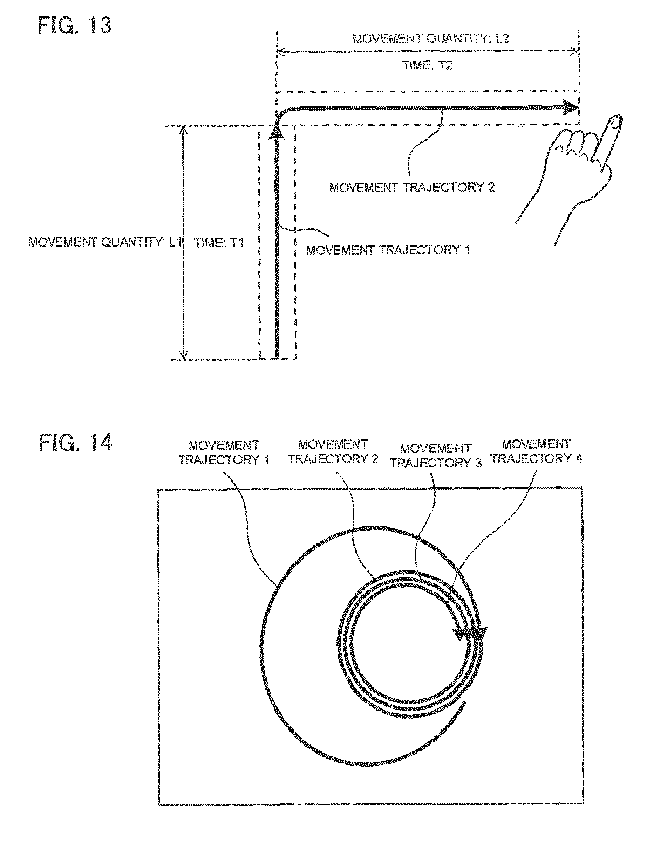

For example, the relative information utilized by the input device 100 for determining the control command is not limited to the relative position information and/or the relative coverage information, and such relative information may be the "relative movement quantity information" representing, for example, relative differences in movement quantity among the plurality of movement trajectories. Assuming that, for example, the input device 100 has extracted the movement trajectory 1 having a movement quantity L1 and the movement trajectory 2 having a movement quantity L2, the relative movement quantity information is, in this case, a movement quantity L2/L1 of the movement trajectory 2 with reference to the movement quantity of the movement trajectory 1 as shown in FIG. 13.

In addition, the relative information utilized by the input device 100 for determining the control command may be the "relative movement speed information" representing relative differences in movement speed among the plurality of movement trajectories. Assuming that, for example, the input device 100 has extracted the movement trajectory 1 traveling a distance L1 in an amount of time T1 that is, movement speed S1 (= L1/T1), and the movement trajectory 2 traveling a distance L2 in an amount of time T2 that is, movement speed S2 (= L2/T2), in this case, the relative movement speed information is a movement speed S2/S1 of the movement trajectory 2 with reference to the movement speed of the movement trajectory 1 as shown in FIG. 13. The time T1 and time T2 may be obtained based on the number of frames, image pick-up intervals, and the like of each image data. Alternatively, the input device 100 including a timer may obtain the times based on the recorded image pick-up duration and the like.

Still further, the memory 160 may store a plurality of command tables. For example, the combination information of Record 1 shown in FIG. 6 may store, in addition to and separately from the command table including the combination information of Record 1 that corresponds to the control command to adjust volume, a command table including the same combination information that corresponds to a control command to start playing music. In this case, switching of the command tables may be carried out based on an input operation through the operator 110 or on user's gestures. The plurality of command tables for operating the same application software, or operating different application software may be utilized.

In the aforementioned embodiment, the control command is determined based on the combination information in the command table containing both of the relative information and the identification information, but the input device 100 may determine the user input by utilizing additional information on the number of consecutive occurrence of the movement trajectories that are determined as the same movement pattern. Assuming that, for example, four clockwise movement trajectories (hereinafter, denoted by numbers 1 to 4, in the order of occurrence) are extracted as shown in FIG. 14, the input device 100 checks the identification information and the relative information of the movement trajectories 1 and 2 with the command table shown in FIG. 6, and determines that the user input is the volume adjustment indicated in Record 1, and further, the input device 100 may determine that, based on the number of consecutive occurrence (four times) of the rotating (clockwise) movement pattern, the change in sound level represents, for example, increasing the level of sound volume by four levels.

Further, the input device 100 may determine the user input based on not only the movement patterns determined as the same but also the number of consecutive occurrence of the movement trajectories that have been determined as having substantially coincident coverages occupied by those movement trajectories (for example, the movement trajectories having the areas and positions that fall into certain threshold values). In the example case in FIG. 14, there are three movement trajectories that are the movement trajectories 2 to 4 having the same movement pattern and the occupied coverages which are substantially coincident. Hence, the input device 100 determines that the number of consecutive occurrence of movement trajectories is three, and the input device 100 may further determine that the user input is, for example, the sound volume increase by three levels.

In the aforementioned embodiment, the "combination information" is obtained by combining at least one of the pieces of relative position information or the relative coverage information with the identification information, but constituent elements to the combination information are not limited to the relative position information, the relative coverage information, and the identification information. For example, one or more pieces of information selected from the relative position information, the relative coverage information, the relative movement quantity information, and the relative movement speed information may be combined with the identification information to create the combination information. Alternatively, without using the identification information, one or more pieces of information selected from, for example, the relative position information, the relative coverage information, the relative movement quantity information, and the relative movement speed information that is, the relative information may be distinctively utilized as the constituent element. In addition, the combination information may be obtained by combining the relative information with other information (for example, the number of successive occurrences of the same movement pattern).

In the step S108, whether the two movement trajectories are temporally successive or not is determined based on whether or not coordinates of the end point and coordinates of the initial point of the two movement trajectories are coincident with each other, but the scheme for determining the consecutiveness of the movement trajectories is not limited to the aforementioned approach. For example, as shown in FIG. 12A, when the movement trajectory 1 and the movement trajectory 2 are extracted from the image data, the movement trajectory extractor 152 may determine a time T1 at which the user's hand (for example, the centroid of the hand range) has passed through the end point of the movement trajectory 1, and a time T2 at which the user's hand has passed through the initial point of the movement trajectory 2, and the movement trajectory extractor 152 may determine whether or not the movement trajectory 1 and the movement trajectory 2 are temporally successive based on whether or not a difference between the time T1 and the time T2 falls within a certain threshold range.

Further, in the step S109, the range of the minimum rectangular enclosing the movement trajectory is specified as the coverage that is occupied by the movement trajectory, but the coverage is not limited to the range of the minimum rectangular enclosing the movement trajectory. For example, the relative information acquirer 153 may specify an range of a predetermined shape (for example, a circle or an oval) enclosing the movement trajectory as the coverage, and as long as the movement trajectory has a loop shape as shown in FIGS. 5A and 5B, portions enclosed by such a loop may be specified as the coverage.

Still further, in the step S105, the movement pattern of movement trajectory is identified by checking the extracted movement trajectory with the feature data in the movement-pattern information table, but various conventional techniques are applicable to the procedure of extracting the movement trajectory and the procedure of checking with the feature data. For example, a best-fit straight line (a regression line) may be obtained using the centroid coordinate data acquired in the step S103 to calculate a degree of similarity between the hand movement trajectory and the approximate straight line, and the hand moving motion having the degree of similarity that is equal to or greater than a certain threshold value may be determined as a straight-line moving motion. In addition, a circularity of the hand movement trajectory may be obtained to determine the hand moving motion having the circularity that is equal to or greater than a certain threshold value as a rotating motion.

Yet further, in the step S102, the range of the minimum rectangular enclosing the human hand is detected as the hand range, but the hand range is not limited to the range of minimum rectangular enclosing the human hand. For example, the relative information acquirer 153 may detect a range of a predetermined shape (for example, a circle or an oval) enclosing the movement trajectory as the hand range, or may detect a shape of hand literally as the hand range.

Moreover, in the step S104, the trajectory of the centroid position of the hand range is extracted as the movement trajectory of hand, but the movement trajectory is not limited to the trajectory of the centroid position. For example, the movement trajectory extractor 152 may extract a trajectory of an upstanding fingertip (for example, an index finger) of a human hand as the movement trajectory of the user's hand.

Furthermore, the gestures recognized by the input device 100 are not limited to the motions of the user's hand (that is, a hand gesture), and such gesturers may be a motion of an object (including a user's body part) that is moved according to the user's intent. For example, the input device 100 may be structured so as to recognize respective motions of a user's head, a foot, eyeballs (the pupil or the iris), fingers and/or toes of hands and feet as the user's gestures. Alternatively, the input device 100 maybe structured so as to recognize a motion of an object held and moved by the user's hand as the user's gesture. For example, the input device 100 may be structured in such a way that, as the user moves a pointer having a spherical object or a light source attached to the tip thereof, the input device 100 records pattern data of the trajectories of the spherical object or the light source, and recognizes the motion of the spherical object or the light source located on the tip of the pointer moved by the user.

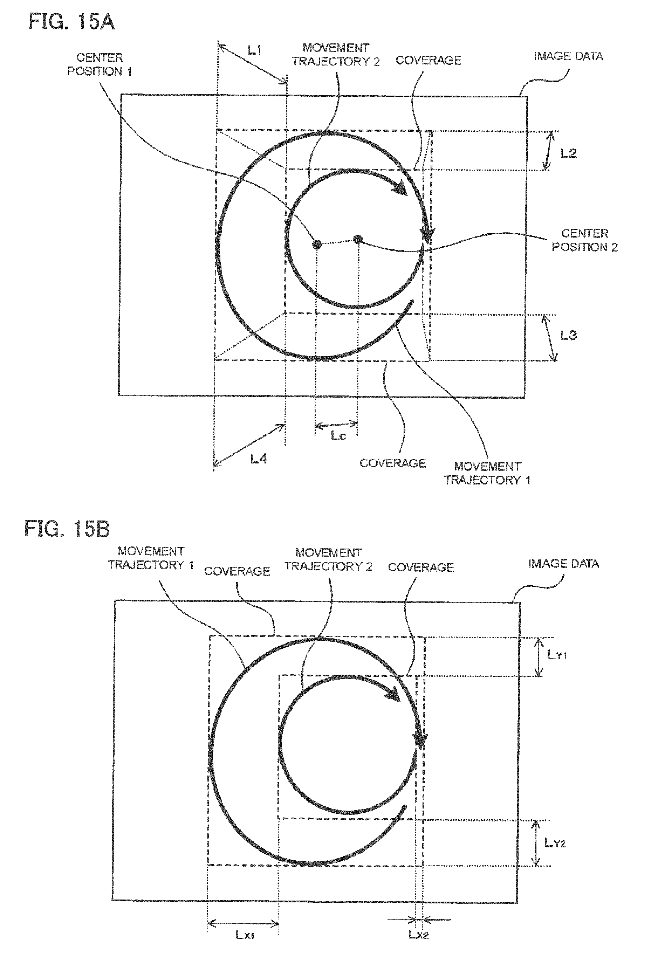

Additionally, in the aforementioned embodiment, the direction of the center position of the coverage that is occupied by the other movement trajectories relative to the center position of the coverage occupied by the one movement trajectory, and the center position coordinates of the other movement trajectories with reference to the center position of the one movement trajectory are exemplified as the relative position information, but the relative position information may be a distance between two movement trajectories, or may be, for example, an angle of the center position of the other movement trajectory relative to the center position of the one movement trajectory as shown in FIG. 15A. In addition, the relative position information may be one or more pieces of information selected from a direction, coordinates, a distance, and an angle.

When a distance between two movement trajectories is taken as the relative position information, such distance may be, for example as shown in FIG. 15A, a distance (a reference L_{C} in the figure) between the center position of the coverage occupied by the movement trajectory (movement trajectory 1) and the center position of the coverage occupied by the other movement trajectory (movement trajectory 2).

In addition, for example as shown in FIG. 15A the distance between the movement trajectory 1 and the movement trajectory 2 may be the longest distance (a reference L4 in the example in the figure) among the distances between each vertex of the coverage occupied by the movement trajectory 1 and a corresponding vertex of the coverage occupied by the movement trajectory 1, such as among a distance L1 between the upper left vertices, a distance L2 between the upper right vertices, a distance L3 between the bottom right vertices, a distance L4 between the bottom right vertices. Alternatively, as shown in FIG. 15B, the distance between the movement trajectory 1 and the movement trajectory 2 may be a longer distance (a reference L_{X1} in the example in the figure) in a distance L_{X1} between the left sides of the coverage and a distance L_{X2} between the right sides thereof, or may be a longer distance (a reference L_{Y2} in the example figure) in a distance L_{Y1} between the upper sides of the coverage and a distance L_{Y2} between the bottom sides. When the dimensions of two movement trajectories, that is, the sizes of two coverages differ as shown in FIGS. 15A and 15B, selecting the distance in this way allows acquisition of the relative position information with a larger value in comparison to when selecting the distance Lc between the center positions as the relative position information.

Yet further, in the aforementioned embodiment, the input determiner 154 is structured so as to input the determined control command to the application software, but the software to which the control command is input is not limited to the application software. The input determiner 154 may input the determined control command to, for example, an operating system. In addition, the input determiner 154 may be structured so as to input the determined command to a device other than the input device 100 via a communication line or wirelessly.

Furthermore, in the aforementioned embodiment, the personal computer is described as an example of the input device 100, but the input device 100 is not limited to the personal computer, and other types of electrical apparatus including a function of determining the user input may be employed. For example, the input device 100 may be a television, a recorder, a game console, a fixed-line telephone, a mobile phone, a smartphone, a tablet terminal, and a Personal Digital Assistant (PDA).

The input device 100 of the embodiment may be accomplished by utilizing a specialized system, or by utilizing a normal computer system. For example, the input device 100 may be structured by having a program for executing the aforementioned operations to be stored in a computer readable recording medium and distributed, and by installing the program on a computer to execute the aforementioned processes. In addition, the program for executing the aforementioned operations may be stored in a disk device of a server device over a network such as the Internet so that the program is, for example, downloadable to a computer. Further, the aforementioned functions may be accomplished by an OS in cooperation with application software. In this case, portions other than the OS may be stored in a medium and be distributed, and such portions may be, for example, downloaded to a computer.

An example recording medium applicable for recording the aforementioned program is a USB memory, a flexible disk, a Compact Disc (CD), a Digital Versatile Disc (DVD), a Blu-ray (registered trademark) disk, a Magneto-Optical Disk (MO), a Secure Digital (SD) memory card, a Memory Stick (registered trademark), or other computer readable recording mediums, such as a magnetic disk, an optical disk, a magneto-optical disk, a semiconductor memory, and a magnetic tape.

Modifications and variations can be made without departing from broader spirit and scope of the present disclosure. It should be noted that the above embodiment is meant only to be illustrative of the embodiment and is not intended to be limiting the scope of the present disclosure. Accordingly, the scope of the present disclosure should not be determined by the embodiment illustrated, but by the appended claims. It is therefore the intention that the present disclosure be interpreted to include various modifications that are made within the scope of the claims and their equivalents.

The aforementioned embodiment in whole or in part can be described as supplementary notes below, but the present disclosure is not limited to such supplementary notes.

### (Supplementary Note 1)

An input device comprising:
image acquiring means that acquires a picked-up image of an object moving in accordance with a user's intent;
movement trajectory extracting means that extracts, from trajectories of the object, a plurality of successive movement trajectories corresponding to movement patterns stored in advance;
relative information acquiring means that acquires relative information representing relative relationships among the plurality of movement trajectories; and
input determining means that determines a user input given to an apparatus based on the relative information.

(Supplementary Note 2)

The input device according to Supplementary Note 1, in which:
the movement trajectory extracting means acquires identification information representing to which one of a plurality of the movement patterns stored in advance each of the plurality of movement trajectories corresponds; and
the input determining means determines the user input based on the identification information and the relative information.

### (Supplementary Note 3)

The input device according to Supplementary Note 2, in which the input determining means:
acquires a number of consecutive occurrences of a movement trajectory that corresponds to a same movement pattern; and
determines the user input based on the number of consecutive occurrences, the identification information, and the relative information.

### (Supplementary Note 4)

The input device according to Supplementary Note 2, further comprising:
a memory that stores, in an associated manner, combination information of relative information to be acquired with identification information to be acquired, and control information for controlling an apparatus,
in which the input determining means determines to which one of a plurality of the pieces of combination information stored in the memory the relative information acquired by the relative information acquiring means and the identification information acquired by the movement trajectory extracting means correspond, and determines that the control information in association with the determined combination information is the user input.

### (Supplementary Note 5)

The input device according to any one of Supplementary Notes 1 to 4, in which the relative information contains at least one of following information: relative position information representing a relationship of a relative position of the plurality of movement trajectories; relative coverage information representing a relative size difference of an occupied coverage; relative movement quantity information representing a relative movement quantity difference; or relative movement speed information representing a relative movement speed difference.

### (Supplementary Note 6)

The input device according to Supplementary Note 5, in which:
the movement trajectory extracting means extracts, from trajectories indicated by the object, two successive movement trajectories each corresponding to the movement patterns stored in advance;
the relative information contains the relative position information; and
the relative information acquiring means acquires a direction of one movement trajectory with reference to a position of another movement trajectory in the two successive movement trajectories as the relative position information.

### (Supplementary Note 7)

The input device according to Supplementary Note 5, in which:
the movement trajectory extracting means extracts, from trajectories indicated by the object, two successive movement trajectories each corresponding to the movement patterns stored in advance;
the relative information contains the relative coverage information; and
the relative information acquiring means acquires an areal ratio of the respective coverages occupied by the two successive movement trajectories as the relative coverage information.

### (Supplementary Note 8)

The input device according to Supplementary Note 5, in which:
the movement trajectory extracting means extracts, from trajectories indicated by the object, two successive movement trajectories each corresponding to the movement patterns stored in advance;
the relative information contains the relative movement quantity information; and
the relative information acquiring means acquires a movement quantity of one movement trajectory with reference to a movement quantity of another movement trajectory in the two successive movement trajectories as the relative movement quantity information.

### (Supplementary Note 9)

The input device according to Supplementary Note 5, in which:
the movement trajectory extracting means extracts, from trajectories indicated by the object, two successive movement trajectories each corresponding to the movement patterns stored in advance;
the relative information contains the relative movement speed information; and
the relative information acquiring means acquires a movement speed of one movement trajectory with reference to a movement quantity of another movement trajectory in the two successive movement trajectories.

### (Supplementary Note 10)

The input device according to any one of Supplementary Notes 1 to 9, in which the object is a human hand.

### (Supplementary Note 11)

An input method comprising:
an image acquisition step for acquiring a picked-up image of an object moving in accordance with a user's intent;
a movement trajectory extraction step for extracting, from trajectories of the object, a plurality of successive movement trajectories corresponding to movement patterns stored in advance;
a relative information acquisition step for acquiring relative information representing a relative relationships among the plurality of movement trajectories; and
an input determining step for determining a user input given to an apparatus based on the relative information.

### (Supplementary Note 12)

A non-transitory recording medium having stored therein a program for causing a computer to realize:
an image acquiring function of acquiring a picked-up image of an object moving in accordance with a user's intent;
a movement trajectory extraction function of extracting, from trajectories of the object, a plurality of successive movement trajectories corresponding to movement patterns stored in advance;
a relative information acquiring function of acquiring relative information representing a relative relationships among the plurality of movement trajectories; and
an input determination function of determining a user input given to an apparatus based on the relative information.

The present application claims the benefit of Priority based on Japanese Patent Application No. 2012-181222 filed on August 17,2012. The entire specification, claims, and figures of Japanese Patent Application No. 2012-181222 are herein incorporated in this specification by reference.

### Reference Signs List

- 100: Input device
- 110: Operator
- 120: Display
- 130: Imager
- 140: Image memory
- 150: Controller
- 151: Image acquirer
- 152: Movement trajectory extractor
- 153: Relative information acquirer
- 154: Input determiner
- 160: Memory

## Claims

1. An input device comprising:
image acquiring means that acquires a picked-up image of an object moving in accordance with a user's intent;
movement trajectory extracting means that extracts, from trajectories of the object, a plurality of successive movement trajectories corresponding to movement patterns stored in advance;
relative information acquiring means that acquires relative information representing relative relationships among the plurality of movement trajectories; and
input determining means that determines a user input given to an apparatus based on the relative information.

2. The input device according to Claim 1, wherein:
the movement trajectory extracting means acquires identification information representing to which one of a plurality of the movement patterns stored in advance each of the plurality of movement trajectories corresponds; and
the input determining means determines the user input based on the identification information and the relative information.

3. The input device according to Claim 2, wherein the input determining means:
acquires a number of consecutive occurrences of a movement trajectory that corresponds to a same movement pattern; and
determines the user input based on the number of consecutive occurrences, the identification information, and the relative information.

4. The input device according to Claim 2, further comprising:
a memory that stores, in an associated manner, combination information of relative information to be acquired with identification information to be acquired, and control information for controlling an apparatus,
wherein the input determining means determines to which one of a plurality of the pieces of combination information stored in the memory the relative information acquired by the relative information acquiring means and the identification information acquired by the movement trajectory extracting means correspond, and determines that the control information in association with the determined combination information is the user input.

5. The input device according to any one of Claims 1 to 4, wherein the relative information contains at least one of following information: relative position information representing a relationship of a relative position of the plurality of movement trajectories; relative coverage information representing a relative size difference of an occupied coverage; relative movement quantity information representing a relative movement quantity difference; or relative movement speed information representing a relative movement speed difference.

6. The input device according to Claim 5, wherein:
the movement trajectory extracting means extracts, from trajectories indicated by the object, two successive movement trajectories each corresponding to the movement patterns stored in advance;
the relative information contains the relative position information; and
the relative information acquiring means acquires a direction of one movement trajectory with reference to a position of another movement trajectory in the two successive movement trajectories as the relative position information.

7. The input device according to Claim 5, wherein:
the movement trajectory extracting means extracts, from trajectories indicated by the object, two successive movement trajectories each corresponding to the movement patterns stored in advance;
the relative information contains the relative coverage information; and
the relative information acquiring means acquires an areal ratio of the respective coverages occupied by the two successive movement trajectories as the relative coverage information.

8. The input device according to Claim 5, wherein:
the movement trajectory extracting means extracts, from trajectories indicated by the object, two successive movement trajectories each corresponding to the movement patterns stored in advance;
the relative information contains the relative movement quantity information; and
the relative information acquiring means acquires a movement quantity of one movement trajectory with reference to a movement quantity of another movement trajectory in the two successive movement trajectories as the relative movement quantity information.

9. The input device according to Claim 5, wherein:
the movement trajectory extracting means extracts, from trajectories indicated by the object, two successive movement trajectories each corresponding to the movement patterns stored in advance;
the relative information contains the relative movement speed information; and
the relative information acquiring means acquires a movement speed of one movement trajectory with reference to a movement speed of another movement trajectory in the two successive movement trajectories.

10. The input device according to any one of Claims 1 to 9, wherein the object is a human hand.

11. An input method comprising:
an image acquisition step for acquiring a picked-up image of an object moving in accordance with a user's intent;
a movement trajectory extraction step for extracting, from trajectories of the object, a plurality of successive movement trajectories corresponding to movement patterns stored in advance;
a relative information acquisition step for acquiring relative information representing relative relationships among the plurality of movement trajectories; and
an input determining step for determining a user input given to an apparatus based on the relative information.

12. A non-transitory recording medium having stored therein a program for causing a computer to realize:
an image acquiring function of acquiring a picked-up image of an object moving in accordance with a user's intent;
a movement trajectory extraction function of extracting, from trajectories of the object, a plurality of successive movement trajectories corresponding to movement patterns stored in advance;
a relative information acquiring function of acquiring relative information representing relative relationships among the plurality of movement trajectories; and
an input determination function of determining a user input given to an apparatus based on the relative information.
